(19) **Europäisches Patentamt**

**European Patent Office**

**Office européen des brevets**

(11) Veröffentlichungsnummer: **0 275 368**
**B1**

(12) **EUROPÄISCHE PATENTSCHRIFT**

(45) Veröffentlichungstag der Patentschrift:
10.01.90

(21) Anmeldenummer: 87115152.8

(22) Anmeldetag: 16.10.87

(51) Int. Cl.⁴: **F16F 9/348**

(54) **Stossdämpferkolben, insbesondere für Kraftfahrzeug-Einrohrdämpfer.**

(30) Priorität: 21.01.87 DE 3701557

(43) Veröffentlichungstag der Anmeldung:
27.07.88 Patentblatt 88/30

(45) Bekanntmachung des Hinweises auf die Patenterteilung:
10.01.90 Patentblatt 90/2

(84) Benannte Vertragsstaaten:
BE DE ES FR GB IT NL SE

(56) Entgegenhaltungen:
DE-A- 3 445 684
DE-C- 969 330
DE-U- 8 221 277
GB-A- 2 118 686

**Die Akte enthält technische Angaben, die nach dem
Eingang der Anmeldung eingereicht wurden und die
nicht in dieser Patentschrift enthalten sind.**

(73) Patentinhaber: **August Bilstein GmbH & Co KG,
August-Bilstein-Strasse,
D-5828 Ennepetal-Altenvoerde 13(DE)**

(72) Erfinder: **Rauert, Max-Otto, Dipl.-Ing., Falkenweg 28,
D-5828 Ennepetal 14(DE)**
Erfinder: **Sporenberg, Heinrich, Breckerfelder
Strasse 183, D-5828 Ennepetal(DE)**
Erfinder: **Doench, Jürgen, Dr. rer. nat.,
Leonardusstrasse 34, D-5300 Bonn 2(DE)**
Erfinder: **May, Ewald, Annaberger Strasse 242,
D-5300 Bonn 2(DE)**

(74) Vertreter: **Sturies, Herbert et al, Patentanwälte Dr. Ing.
Dipl. Phys. Herbert Sturies Dipl. Ing. Peter Eichler
Postfach 20 12 42, D-5600 Wuppertal 2(DE)**

## Beschreibung

Die Erfindung bezieht sich auf einen insbesondere für Kraftfahrzeug-Einrohrdämpfer bestimmten Stoßdämpferkolben, mit einem am Kolbenstangenende befestigten Kolbenkörper, der auf seinen beiden Seiten mit je einer Ringkammer und diese abdeckenden, zentral eingespannten Ventilfederscheiben versehen ist, die mit ihrem Außenumfang auf einer die Ringkammer außen umgebenden Ringschulter aufliegen, und wobei im Kolbenkörper weiterhin zwei Gruppen von gegensinnig durchströmbaren Flüssigkeitsdurchtrittskanälen vorhanden sind, die jeweils von der einen Ringkammer durch den Kolbenkörper schräg hindurch zu dessen gegenüberliegender Seite führen und dort in einem außerhalb der Ringschulter gelegenen, abgeflachten Seitenrandbereich des Kolbenkörpers ihr Zulaufende haben.

Stoßdämpferkolben obiger Art sind z.B. durch die GB-A 2 118 686 bekannt. Durch die auf beiden Seiten des Kolbens vorhandenen Ringkammern werden die sie abdeckenden zentral eingespannten Ventilfederscheiben in der jeweiligen Bewegungsrichtung des Kolbens, also während seiner Zug- oder Druckstufe, verhältnismäßig breitflächig hydraulisch beaufschlagt, was die Verwendung vergleichsweise dicker Ventilfederscheiben bzw. -scheibenpakete ermöglicht. Von Vorteil ist dabei weiterhin, daß durch die vergleichsweise schmale Auflage der Ventilfederscheiben mit ihrem Außenumfang auf der die Ringkammer umgebenden Ringschulter die sonst bei Dämpfern vielfach störende Poltergeräuschbildung weitestgehend vermieden wird. Bei dem vorbekannten Stoßdämpferkolben ist aber die hydraulische Anströmung der Ventilfederscheiben trotz ihrer durch den zugehörigen Ringkanal gegebenen breitflächigen Beaufschlagung noch unzureichend, weil die zu den Ringkammern führenden Flüssigkeitsdurchtrittskanäle wie im übrigen auch bei den meisten übrigen Stoßdämpferkolben als verhältnismäßig enge Bohrungen ausgebildet sind, die insbesondere bei höheren Kolbengeschwindigkeiten zu vielfach unerwünscht starker Dämpfungskrafterhöhung führen. Zwar verläuft bei diesem vorbekannten Stoßdämpferkolben die Dämpfungskennlinie im Bereich höherer Kolbengeschwindigkeiten nicht mehr wie im Bereich mittlerer Kolbengeschwindigkeiten progressiv, sondern nur noch linear ansteigend. Das ist jedoch immer noch ein zu starker Dämpfungskraftanstieg, der sich auf die Fahrsicherheit hauptsächlich insofern nachteilig auswirkt, als dadurch im Bereich höherer Kolbengeschwindigkeiten wegen zu starker Bremsung der Kolbenbewegung die Bodenhaftung der Fahrzeugräder erheblich zurückgeht.

Der Erfindung liegt daher die Aufgabe zugrunde, einen Stoßdämpferkolben der eingangs erwähnten Gattung zu schaffen, der unter Beibehalt seines polterfreien Arbeitens ein von Herstelltoleranzen weitgehend unabhängiges Kraft-Geschwindigkeitsdiagramm liefert, das noch dazu im Bereich höherer Kolbengeschwindigkeiten auch degressiv verlaufen kann, ohne daß dazu die im Bereich geringerer Kolbengeschwindigkeiten vorteilhafte progressive Kennung aufgegeben werden müßte. Weiterhin soll das Kraftgeschwindigkeitsdiagramm auch möglichst wenig von der Viskosität der verwendeten Dämpfungsflüssigkeit abhängig sein, der Kolben also weitgehend kälte- und wärmeunempfindlich arbeiten. Diese Aufgabe wird ausgehend von einem Stoßdämpferkolben der in Rede stehenden Gattung erfindungsgemäß dadurch gelöst, daß die Flüssigkeitsdurchtrittskanäle sich bis auf zwischen ihnen gelegene, schmale, radial verlaufende Trennstege über den gesamten Kolbenkörperumfang erstrecken, wobei sie an ihrem im Seitenrandbereich gelegenen Zulaufende als in Umfangsrichtung verlaufende schmale Bogenschlitze ausgebildet sind, hingegen an ihrem in die Ringkammer einmündenden Auslaufende einen in Umfangsrichtung kürzeren aber radial breiteren, im wesentlichen trapezförmigen Querschnitt besitzen, so daß sich für beide Arbeitsrichtungen des Kolbens größtmögliche Durchflußquerschnitte für die Dämpfungsflüssigkeit ergeben. Auf diese Weise kommt man zu einem Stoßdämpferkolben, dessen Kolbenkörper in weitestmöglichem Umfang von den Flüssigkeitsdurchtrittskanälen durchsetzt ist, zumal deren Zulaufenden wegen der flach beschaffenen Kolbenseitenrandbereiche so weit wie möglich an den Außenumfang des Kolbenkörpers heranreichen können. Der Durchflußwiderstand der Kolbenkanäle, der sonst vor allem im Bereich höherer Kolbengeschwindigkeiten für den vermehrten Dämpfungskraftanstieg verantwortlich ist, wird dadurch so weit wie möglich herabgesetzt Das wiederum hat zur Folge, daß die Ventilfederscheiben verhältnismäßig stark hydraulisch beaufschlagt werden und daher ihre Auswahl und Vorspannung das Dämpfungsverhalten umso stärker beeinflussen. Insbesondere kann aufgrund des geringen Durchflußwiderstandes der Kolben kanäle ein geschwindigkeitsabhängiges Dämpfungskraftdiagramm erhalten werden, das im Bereich höherer Kolbengeschwindigkeiten auch mehr oder weniger degressiv verläuft, wodurch die Fahrsicherheit wesentlich verbessert werden kann. Auch ist das Dämpfungsverhalten wesentlich toleranz- und temperaturunempfindlicher. Als Dämpfungsflüssigkeit soll insbesondere Dämpfungsöl verwendet werden.

Die vergleichsweise starke hydraulische Beaufschlagung der Ventilfederscheiben erlaubt es, daß diese mit ihrem Außenumfang vorteilhaft an Tellerfedern axial abgestützt werden, die sich ihrerseits an zu beiden Seiten des Kolbenkörpers auf dem Kolbenstangenende befestigten Stützscheiben axial abstützen. Durch entsprechende Bemessung dieser Tellerfedern und deren Vorspannung in Verbindung mit der der Ventilfederscheiben lassen sich in weiten Bereichen variierende Dämpferkrafteinstellungen insbesondere auch mit degressiver Kennung im höheren Kolbengeschwindigkeitsbereich einstellen. Wird dazu weiterhin noch wie an sich bekannt ein permanenter Flüssigkeitsdurchlaß vorgesehen, der vorteilhaft aus einer in der auf der Ringschulter des Kolbenkörpers aufliegenden Ventilfederscheibe vorhandenen, die Ringschulter überquerenden Bypass-Aussparung besteht, so lassen sich damit insgesamt sehr vorteilhafte Dämpfungskraftdiagramme erzielen, die im Bereich kleinster Kolbengeschwindigkeiten einen sanft ansteigenden, sodann bei zunehmenden Kolbengeschwindigkeiten einen stark progressiv ansteigenden und schließlich im Bereich höherer Kolbengeschwindigkeiten einen degressiven Kennlinienverlauf besitzen.

Nach einem weiteren Merkmal der Erfindung kann der Kolbenkörper vorteilhaft aus zwei ihn äquatorial unterteilenden, identisch beschaffenen Kolbenkörperhälften bestehen, die auf ihren flach aufeinanderliegenden Innenseiten speichenradartig geformt sind, wobei jeder zwischen Kolbenkörpernabe, –felge und – speichen liegende Flüssigkeitsdurchtrittskanal abwechselnd entweder mit einem innen an der Kolbenkörpernabe ansetzenden, sich nach außen bis zum Bogenschlitz erstreckenden Kanalboden oder einer an der Kolbenkörperfelge ansetzenden, nach innen geneigten und zur zugehörigen Ringkämmer führenden Schrägwandung versehen ist. Das ermöglicht eine einfache .Fertigung der Kolbenkörperhälften und Ausräumung ihrer Flüssigkeitsdurchtrittskanäle, sei es z. B. auf spanabhebende oder elektroerosive Weise. Es versteht sich aber, daß die Kolbenkörperhälften ebensogut auch aus Sintermetall, Druck- oder Feinguß bestehen oder in einer sonstigen bekannten Herstelltechnik gefertigt sein können. Es ist aber auch möglich, den Kolbenkörper insgesamt als einteiligen Körper, insbesondere als Sinterkörper auszubilden.

In der Zeichnung sind mehrere vorteilhafte Ausführungsbeispiele erfindungsgemäß beschaffener Stoßdämpferkolben dargestellt. Dabei zeigen:

Fig. 1 einen in einen Kraftfahrzeug-Einrohrdämpfer eingebauten Stoßdämpferkolben erster Ausführungsform in teilweise axial verlaufendem Schnitt,

Fig. 2 und 3 den Stoßdämpferkolben der Fig. 1 in der Draufsicht und im Axialschnitt,

Fig. 4, 5 und 6 eine Kolbenkörperhälfte des vorerwähnten Stoßdämpferkolbens in der Außen-, Schnitt- und Innenansicht,

Fig. 7 und 8 einen Stoßdämpferkölben mit je vier in der Zug- und Druckstufe durchströmbaren Flüssigkeitsdurchtrittskanälen in der Seitenansicht und im Schnitt,

Fig. 9, 10 und 11 eine Kolbenhälfte des Stoßdämpferkolbens mit je vier Durchtrittskanälen in der Außen-, Schnitt- und Innenansicht,

Fig. 12, 13 und 14 eine dritte Ausführungsform mit einteiligem Kolbenkörper in seinen beiden Seitenansichten und im Schnitt, und

Fig. 15 einen der Fig. 1 entsprechenden Schnitt, bei dem die Ventilfederscheiben jedoch konisch vorgespannt sind.

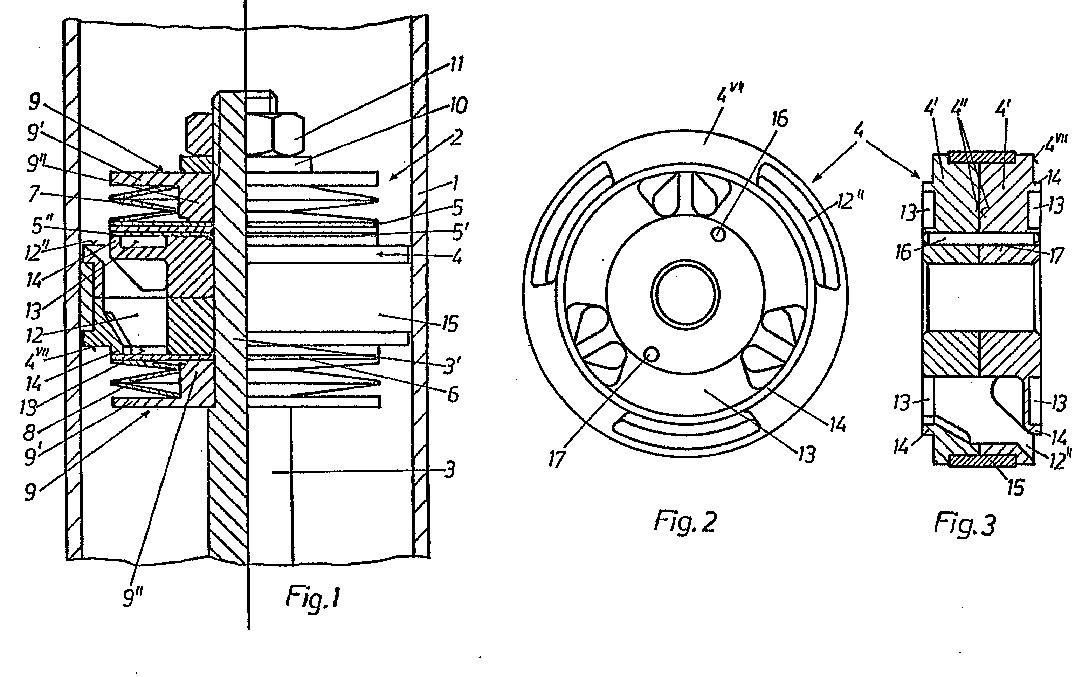

In dem in Fig. 1 teilweise im Schnitt dargestellten, mit Öl als Dämpfungsflüssigkeit gefüllten Zylinder 1 eines Kraftfahrzeug-Einrohrdämpfers ist der generell mit 2 bezeichnete Stoßdämpferkolben axial verschieblich geführt untergebracht. Er ist am Ende 3' einer über das eine Stirnende des Zylinders 1 abdichtend herausgeführten Kolbenstangen 3 befestigt. Der Stoßdämpferkolben 2 besteht im wesentlichen aus dem in Fig. 2 und 3 abgebildeten Kolbenkörper 4 und den zu dessen beiden Seiten angeordneten Ventilfederscheiben 5, 6, die an ihren Außenumfängen an Tellerfedern 7, 8 axial abgestützt sind. Diese Tellerfedern sind wiederum an den sie hintergreifenden Flanschen 9' von T-profilartig ausgebildeten Stützscheiben 9 abgestützt, die mit ihren Profilköpfen 9" auf dem Innenumfang der ringförmigen Ventilfederscheiben 5, 6 aufsitzen und für deren zentrale Einspannung sorgen. Die Stützscheiben 9, die Ventilfederscheiben 5, 6 sowie die Abschlußscheibe 10 sind jeweils mit zentralen Bohrungen versehen, über die sie auf das im Durchmesser abgesetzte Kolbenstangenende 3' aufgesteckt und dort mittels der Schraubmutter 11 befestigt sind. In der untersten, auf dem Kolbenkörper 4 aufliegenden Ringfederscheibe 5' des während der Zugstufe des Kolbens wirksamen Federscheibenpakets 5 befindet sich außen eine für einen dauernden Flüssigkeitsdurchlaß sorgende Bypass-Aussparung 5".

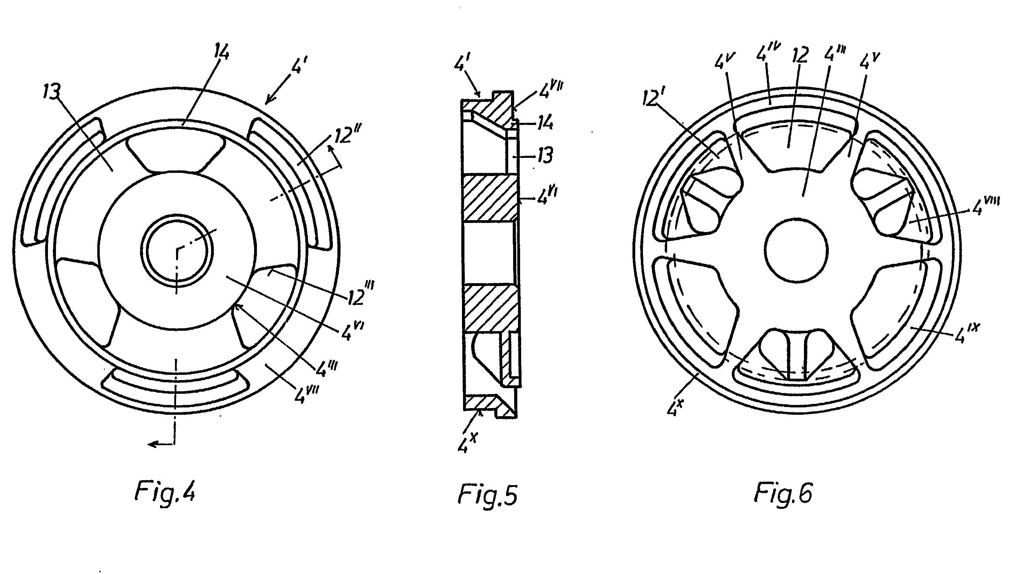

Der Kolbenkörper 4 besteht, wie die Fig. 2 und 3 zeigen, aus zwei ihn äquatorial unterteilenden, identisch beschaffenen Kolbenkörperhälften 4', die auf ihren flach aufeinanderliegenden Innenseiten 4" speichenradartig geformt sind, wie das insbesondere Fig. 6 erkennen läßt. Dabei bilden die zwischen der Kolbenkörpernabe 4''', der Kolbenkörperfelge $4^{IV}$ und den Kolbenkörperspeichen $4^V$ gelegenen Freiräume je einen Flüssigkeitsdurchtrittskänal 12 bzw. 12'. Im vorliegenden Fall sind es je drei Durchtrittskanäle 12 bzw. 12' für die Zug- und Druckstufe des Stoßdämpferkolbens.

Auf ihren Außenseiten besitzen die Kolbenkörperhälften 4' je eine Ringkammer 13, die außen von einer umlaufenden Ringschulter 14 umgeben ist, welche auf gleicher Höhe mit der äußeren Stirnfläche $4^{VI}$ der Kolbenkörpernabe 4''' liegt. Die Ringkammern 13 werden durch die zugehörigen Ventilfederscheiben 5 bzw. 6 abgedeckt, die dabei mit ihrem Innenumfang auf der äußeren Stirnwand $4^{VI}$ der Kolbenkörpernabe und mit ihrem Außenumfang auf der Ringschulter 14 aufliegen. Die oben erwähnte, in der aufliegenden Ventilfederscheibe 5' außen vorhandene Bypass-Aussparung 5" ist so weit ausgetieft, daß sie entsprechend Fig. 1 die Ringschulter 14 überquert und damit an dieser Stelle den permanenten Durchlaß bildet.

Der Kolbenkörper 4 bzw. seine beiden identisch beschaffenen Hälften 4' sind in ihrem außerhalb der Ringschulter 14 gelegenen Seitenrandbereich $4^{VII}$ abgeflacht. Die Flüssigkeitsdurchtrittskanäle 12, 12' erstrecken sich mit Ausnahme der zwischen ihnen gelegenen, schmalen radial verlaufenden Trennstege (Speichen $4^V$) über den gesamten Kolbenkörperumfang, wobei sie an ihren im Seitenrandbereich $4^{VII}$ des Kolbenkörpers gelegenen Zulaufenden als in Umfangsrichtung verlaufende schmale Bogenschlitze 12" ausgebildet sind, während sie an ihrem in die Ringkammer 13 einmündenden Auslaufende 12''' einen in Umfangsrichtung kürzeren aber radial breiteren, im wesentlichen trapezförmigen Querschnitt besitzen. Die Flüssigkeitsdurchtrittskanäle 12, 12' sind abwechselnd entweder mit einem innen an der Kolbenkörpernabe 4''' ansetzenden, sich nach außen bis zum Bogenschlitz 12" erstreckenden Kanalboden $4^{VIII}$ oder einer an der Kolbenkörperfelge $4^{IV}$ ansetzenden, nach innen geneigten und zur zugehörigen Ringkammer 13 führenden Schrägwandung $4^{IX}$ versehen. An ihren Außenumfängen sind die Kolbenkörperhälften 4' noch mit einer ringförmigen Aussparung $4^{X}$ versehen. Beide ergänzen sich zu einer gemeinsamen Ringnut, in welcher der zur Führung und Dichtung des Kolbens 2 dienende Kolbenring 15 liegt. Damit die beiden identisch beschaffenen Kolbenkörperhälften 4' ordnungsgemäß, also entsprechend drehversetzt zusammengebaut werden können, ist jede von ihnen noch mit einem Paßelementepaar, z. B. einem Paßstift 16 und einer Paßbohrung 17 versehen, in die jeweils der Paßstift 16 der anderen Kolbenkörperhälfte 4' hineinpaßt, um auf diese Weise eine entsprechende Montagevereinfachung zu erzielen.

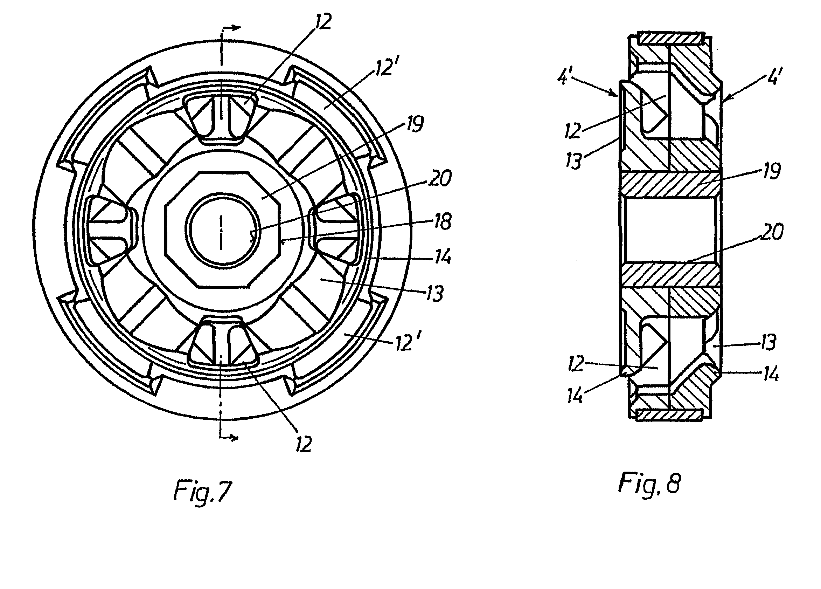

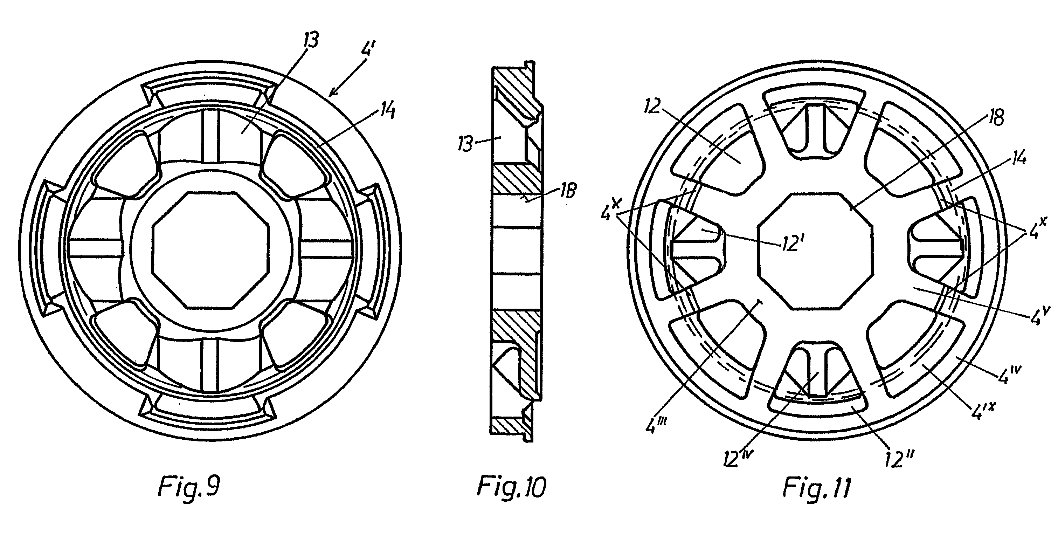

Der in den Fig. 7 bis 11 dargestellte Kolbenkörper besteht gleichfalls aus zwei identisch beschaffenen Kolbenkörperhälften 4', unterscheidet sich . aber von dem vorbeschriebenen im wesentlichen dadurch, daß er statt drei jeweils vier abwechselnd hintereinanderliegende Flüssigkeitsdurchtrittskanäle 12, 12' für die Zug- und Druckstufe des Kolbens aufweist. Auch in diesem Falle sind die beiden Kolbenkörperhälften 4', wie insbesondere Fig. 11 zeigt, an ihren flach aufeinanderliegenden Innenseiten 4" speichenradartig geformt, wobei die Flüssigkeitsdurchtrittskanäle 12, 12' wiederum abwechselnd entweder mit einem innen an der Kolbenkörpernabe 4''' ansetzenden, sich nach außen bis zum Bogenschlitz 12" erstreckenden, rinnenförmig ausgetieften Kanalboden $12^{IV}$ oder einer an der Kolbenkörperfelge $4^{IV}$ ansetzenden, nach innen geneigten und zur zugehörigen Ringkammer 13 führenden Schrägwandung $4^{IX}$ versehen sind. In diesem Falle sind beide Kolbenkörperhälften 4' mit einer der Anzahl der Flüssigkeitsdurchtrittskanäle 12, 12' entsprechend gradzahligen Innenmehrkantausnehmung 18 versehen, im vorliegenden Falle also einer Achtkant-Ausnehmung. Beide Hälften 4' sind über eine in diese Ausnehmung 18 eingesteckte, außen entsprechend mehrkantig ausgebildete Befestigungsbüchse 19 drehfest miteinander verbunden. In dieser Befestigungsbüchse 19 befindet sich die zentrale Aufnahmebohrung 20 für das Kolbenstangenende 3'. Wie Fig. 11 zeigt, können in einige der Kolbenkörperspeichen $4^{V}$ innenseitig auch noch sie querende Bypass-Nuten $4^{X}$ eingeformt oder eingearbeitet sein, die also je zwei benachbarte, gegenläufig durchströmbare Flüssigkeitsdurchtrittskanäle 12, 12' bypassartig miteinander verbinden.

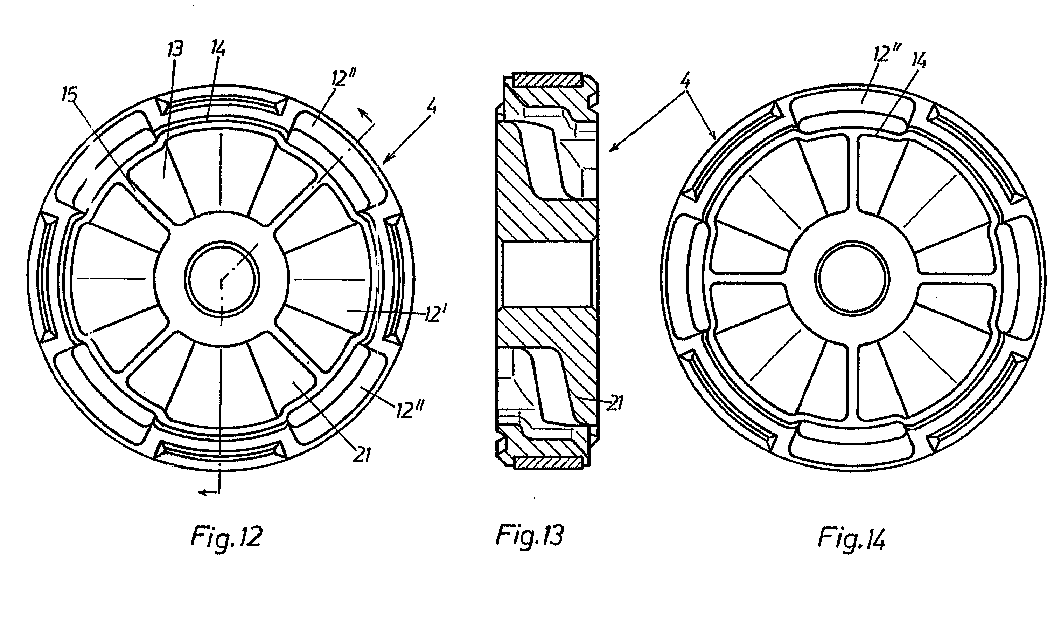

Bei dem in den Fig. 12 bis 14 dargestellten Ausführungsbeispiel besteht der Kolbenkörper 4 aus einem einteiligen Sinterkörper. Auch hier sind für jede Durchströmungsrichtung je vier Flüssigkeitsdurchtrittskanäle 12, 12' vorhanden, die durch schmale radial verlaufende Trennstege voneinander getrennt sind und wobei jeweils abwechselnd schräg nach außen und innen geneigt verlaufende, bis zu den Bogenschlitzen 12" führende Trennböden 21 vorgesehen sind. Die Bogenschlitze 12" liegen auch hier außerhalb der umlaufenden Ringschulter 14, die die in diesem Fall durch die Speichen 15 in einzelne Kammersegmente 13' unterteilte Ringkammer 13 umgeben. Es versteht sich aber, daß die Stege 15 auch entfallen bzw. abgeflachter ausgebildet sein können, so daß sich dann eine ringsum geschlossene Ringkammer 13 ergibt. Auch in diesem Fall sind die außerhalb der Ringschulter 14 gelegenen Zulaufenden der Flüssigkeitsdurchtrittskanäle 12 bzw. 12' als schmale Bogenschlitze 12" ausgebildet und an ihren in die Ringkammer 13 bzw. die Ringkammersegmente 13' ausmündenden Enden von im wesentlichen trapezförmigem Querschnitt.

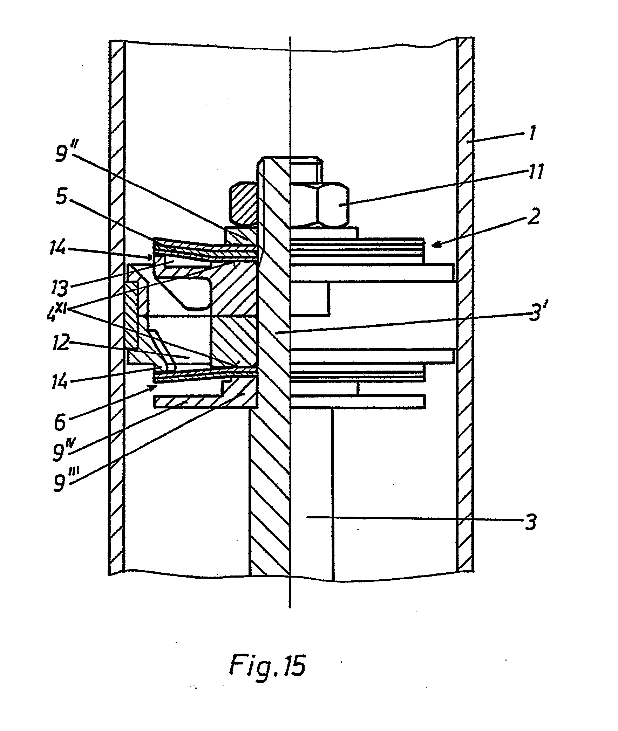

Bei dem in Fig. 15 dargestellten Ausführungsbeispiel springen die die Ringkammern 13 umgebenden Ringschultern 14 jeweils axial über die zentralen Kolbenkörper-Einspannflächen $4^{XI}$ der beiden Kolbenkörperhälften 4' vor, so daß die sich mit ihrem Außenumfang auf der Ringschulter 14 abstützenden Ventilfederscheiben 5, 6 durch die rückwärtig zentral an ihnen angreifenden, auf dem Kolbenstangenende 3' befestigten Stützscheiben 9", 9''' konisch zu verformen und dadurch vorspannbar sind. Durch nicht dargestellte, zwischen den Stützflächen $4^{XI}$ und den jeweils inneren Ventilfederscheiben eingelegte Zwischenscheiben, Ringe od. dgl. kann die konische Verformungsgrad der Ventilfederscheiben 5, 6 und damit deren Vorspannung entsprechend geändert werden. Um die in der Einfahrbzw. Druckstufe wirksamen Ventilfederscheiben 6 gegen allzu starke Einfahrstöße bzw. zu starke Beanspruchungen zu schützen, kann die sie rückwärtig abdeckende Stützscheibe 9''' noch mit einem entsprechenden Stützflansch $9^{IV}$ versehen sein, gegen die die Ventilfederscheiben 6 anschlagen können. Bei den in der Druckstufe wirksamen Ventilfederscheiben 5 ist das normalerweise nicht nötig. Gegebenenfalls können aber auch die Stützscheiben 9" mit einem entsprechenden Stützflansch versehen werden.

Im Rahmen der vorliegenden Erfindung sind mancherlei Abwandlungen möglich. Insbesondere können die Ventilfederscheiben 5, 6 abweichend von ihrer planen oder leicht konisch gewölbten Form auch als Tellerringfedern ausgebildet sein, wobei eine solche Tellerfeder sich mit ihrem Außenumfang auf der Ringschulter 14 des Kolbenkörpers und sich mit ihrem Innenumfang an der Stützscheibe 9 bzw. deren Stützflansch 9' abstützen könnte, so daß in diesem Fall die Tellerringfeder direkt das den Ringkanal 13 abdeckende Ventilelement bildet.

## Patentansprüche

1. Stoßdämpferkolben, insbesondere für Kraftfahrzeug-Einrohrdämpfer, mit einem am Kolbenstangenende (3') befestigten Kolbenkörper (4), der auf seinen beiden Seiten mit je einer Ringkammer (13) und diese abdeckenden, zentral eingespannten Ventilfederscheiben (5, 6) versehen ist, die mit ihrem Außenumfang auf einer die Ringkammer (13) außen umgebenden Ringschulter (14) aufliegen, und mit zwei Gruppen von gegensinnig durchströmbaren Flüssigkeitsdurchtrittskanälen (12, 12'), die jeweils von der einen Ringkammer (13) durch den Kolbenkörper (4) schräg hindurch zu dessen gegenüberliegender Seite führen und dort in der Ringschulter (14) gelegenen, abgeflachten Seitenrandbereich ($4^{VII}$) des Kolbenkörpers (4) ihr Zulaufende haben, dadurch gekennzeichnet, daß die Flüssigkeitsdurchtrittskanäle (12, 12') sich bis auf zwischen ihnen gelegene, schmale, radial verlaufende Trenn-stege (4$^V$) über den gesamten Kolbenkörperumfang erstrecken, wobei sie an ihrem im Seitenrandbereich (4$^{VII}$) gelegenen Zulaufende als in Umfangsrichtung verlaufende - schmale Bogenschlitze (12") ausgebildet sind und an ihrem in die Ringkammer (13) einmündenden Auslaufende 12''') einen in Umfangsrichtung kürzeren aber radial breiteren, im wesentlichen trapezförmigen Querschnitt besitzen, so daß sich für beide Arbeitsrichtungen des Kolbens größt-mögliche Durchflußquerschnitte für die Dämp-fungsflüssigkeit ergeben.

2. Stoßdämpferkolben nach Anspruch 1, **dadurch gekennzeichnet**, daß die Ventilfederscheiben (5, 6) mit ihrem Außenumfang an Tellerfedern (7, 8) axial abgestützt sind, die sich ihrerseits an zu beiden Seiten des Kolbenkörpers (4) auf dem Kolbenstangenende (3') befestigten Stützscheiben (9) axial abstützen.

3. Stoßdämpferkolben nach Anspruch 2, **dadurch gekennzeichnet**, daß die Stützscheiben (9) ein T-Profil besitzen, mit ihren einander zugewandt liegenden Profilköpfen (9") auf den Ventilfederscheiben (5, 6) zentral aufsitzen und mit ihren abgewandt liegenden Profilflanschen (9') die Tellerfedern (7, 8) abstützend hintergreifen.

4. Stoßdämpferkolben nach Anspruch 1, **dadurch gekennzeichnet**, daß in einer der auf der zugehörigen Ringschulter (14) des Kolbenkörpers (4) aufliegenden Ventilfederscheibe (5'), insbesondere in der während der Zugstufe des Kolbens (2) wirksamen, außen eine die Ringschulter (14) überquerende Bypass-Aussparung (5") vorhanden ist.

5. Stoßdämpferkolben nach einem der Ansprüche 1 bis 4, **dadurch gekennzeichnet**, daß je drei ab-wechselnd hintereinanderliegende Flüssigkeits-durchtrittskanäle (12, 11') für die Zug- und Druckstufe des Kolbens (2) vorgesehen sind. (Fig. 2-6).

6. Stoßdämpferkolben nach einem der Ansprüche 1 bis 4, **dadurch gekennzeichnet**, daß je vier ab-wechselnd hintereinanderliegende Flüssigkeits-durchtrittskanäle (12, 12') für die Zug- und Druckstufe des Kolbens (2) vorgesehen sind. (Fig. 7-14).

7. Stoßdämpferkolben nach Anspruch 5 oder 6, **dadurch gekennzeichnet**, daß der Kolbenkörper (4) aus zwei ihn äquatorial unterteilenden, identisch beschaffenen Kolbenkörperhälften (4') besteht, die auf ihren flach aufeinanderliegenden Innenseiten speichenradartig geformt sind, wobei jeder zwi-schen Kolbenkörpernabe (4'''), -felge (4$^{IV}$) und -speichen (4$^V$) liegende Flüssigkeitsdurchtrittskanal (12, 12') abwechselnd entweder mit einem innen an der Kolbenkörpernabe (4''') ansetzenden, sich nach außen bis zum Bogenschlitz (12") erstreckenden Kanalboden (4$^{VIII}$) oder einer an der Kolbenkörperfelge (4$^{IV}$) ansetzenden, nach innen geneigten und zur zugehörigen Ringkammer (13) führenden Schräg-wandung (4$^{IX}$) versehen ist.

8. Stoßdämpferkolben nach Anspruch 7, **dadurch gekennzeichnet**, daß beide Kolbenkörperhälften (4') auf ihrer Innenseite (4") mit je einem ihren ent-sprechend drehversetzten Zusammenbau gewähr-leistenden Paßelementepaar, z. B. mit je einem Paßstift (16) und einer Paßbohrung (17) versehen sind. (Fig. 2, 3).

9. Stoßdämpferkolben nach Anspruch 7, **dadurch gekennzeichnet**, daß beide Kolbenkörperhälften (4') mit einer der Anzahl der Flüssigkeitsdurch-trittskanäle entsprechend geradzahligen Innen-mehrkantausnehmung (18) versehen und über eine darin eingesteckte, außen entsprechend mehrkan-tig ausgebildete Befestigungsbüchse (19) verdre-hungsfest miteinander verbunden sind, die eine zentrale Aufnahmebohrung (20) für das Kolbenstangenende (3') aufweist. (Fig. 7, 8).

10. Stoßdämpferkolben nach Anspruch 5 oder 6, **dadurch gekennzeichnet**, daß der Kolbenkörper (4) aus einem einteiligen Sinterkörper besteht, der mit zwischen den die Flüssigkeitsdurchtrittskanäle (12, 12') voneinander trennenden, radial verlaufenden Trennstegen jeweils abwechselnd schräg nach außen und innen geneigt verlaufenden, bis zu den Bogenschlitzen (12") führenden Trennböden (21) versehen ist. (Fig. 12 bis 14).

11. Stoßdämpferkolben nach einem der Ansprüche 1 bis 10, **dadurch gekennzeichnet**, daß der Kolbenkörper (4) an seinem Umfang mit einer ringförmigen Aussparung (4$^X$) und einem darin eingelegten Kolbenring (15) versehen ist.

12. Stoßdämpferkolben nach Anspruch 7, **dadurch gekennzeichnet**, daß in die flach aufeinander liegenden Innenseiten der beiden Kolbenkörperhälften (4') ein oder mehrere die Kolbenkörperspeichen (4$^V$) querende Bypass-Nuten (4$^X$) eingeformt oder eingearbeitet sind (Fig. 11).

13. Stoßdämpferkolben nach Anspruch 1, **dadurch gekennzeichnet**, daß die die Ventilfederscheiben (5, 6) an ihrem Außenumfang abstützende Ringschulter (14) über deren zentrale Kolbenkör-per-Einspannfläche (4$^{XI}$) axial vorspringt und die Ventilfederscheiben (5, 6) durch rückwärtig zentral an ihnen angreifende, auf dem Kolbenstangenende (3') befestigte Stützscheiben (9", 9''') konisch zu verformen und dadurch vorspannbar sind.


**Claims**

1. Shock absorber piston, particularly for monotu-bular dampers for motor vehicles, comprising a piston body (4) secured to the end (3), of a piston rod, said piston body being provided on both its sides with respective annular chambers (13) and with centrally clamped valve-spring discs (5, 6) closing said chambers, wherein the outer margin of each valve-spring disc is in contact with an annular shoulder (14) which encircles the annular chamber (13) on the outside, and also comprising two groups of fluid flow passageways (12, 12') for fluid flow in mutually opposite senses, each of said passageways leading from the one annular chamber (13) through the piston body (4) at an angle through to the opposite side of the piston body and there having its inlet end in a recessed lateral edge region (4$^{VII}$) of the piston body (4) which lies radially outwardly of the annular shoulder (14), characterised in that the fluid flow passageways (12, 12') extend around the full piston body circumference apart from narrow radially extending separating webs (4$^V$) lying between the passageways, wherein the passageways, at their inlet ends in the lateral edge region (4$^{VII}$), are formed as narrow curved slots (12") extending in the circumferential direction and at their outlet ends (12'") where they issue into the annular chambers (13) have a substantially trapezoidal cross-section which is shorter in the circumferential direction than the said slots but radially wider, so that there is a maximum flow crosssection for the damping fluid for both directions of movement of the piston.

2. Shock absorber piston according to claim 1, characterised in that the valve-spring discs (5, 6) have their outer margins axially supported against cup springs (7, 8) which for their part are axially supported against support members (9) secured to the end (3') of the piston rod on both sides of the piston body (4).

3. Shock absorber piston according to claim 2, characterised in that the support members (9) are T-shaped with their stems (9") which are positioned facing towards each other in contact centrally with the valve-spring discs (5, 6) and with their flanges (9') which lie remote from each other engaging supportingly with the cup springs (7, 8).

4. Shock absorber piston according to claim 1 , characterised in that in one of the valve-spring discs (5') which is in contact with the associated annular shoulder (14) of the piston body (4), particularly in the valve-spring disc which is effective during the expansion stroke of the piston (2), a bypass recess (5") is provided in the outer margin of the disc and traversing the annular shoulder (14).

5. Shock absorber piston according to one of claim, to 4, characterized in that three fluid flow passageways (12, 11') are provided for each of the expansion and compression strokes of the piston (2) with each passageway for one stroke direction being arranged alternately with a passageway for the other stroke direction. (Figs. 2 to 6).

6. Shock absorber piston according to one of claims 1 to 4, characterised in that four fluid flow passageways (12, 12') are provided for each of the expansion and compression strokes of the piston (2) with each passageway for one stroke direction being arranged alternately with a passageway for the other stroke direction. (Figs. 7 to 14).

7. Shock absorber piston according to claim 5 or 6, characterised in that the piston body (4) consists of two identical piston body halves (4') which divide the piston body equatorially, each half being shaped as a spoked wheel on its flat axial inner face which faces the other half, wherein each fluid flow passageway (12, 12') lying between piston body hub (4'"), piston body rim (4$^{IV}$) and piston body spokes (4$^V$) is provided alternately either with a channel bottom (4$^{VIII}$) extending outwardly as far as the curved slot (12") and in contact inwardly with the piston body hub (4'"), or with an inclined wall (4$^{IX}$) which is in contact with the piston body rim (4$^{IV}$) and which is inclined inwards and leads to the associated annular chamber (13).

8. Shock absorber piston according to claim 7, characterised in that both piston body halves (4') are provided at their axial inner faces (4") with a pair of fitting elements ensuring rotational correlation for their combination together, e.g. with a set pin (16) and a receiving bore (17) respectively. (Fig. 2, 3).

9. Shock absorber piston according to claim 7, characterised in that the two piston body halves (4') are provided with an internal polygonal recess (18) the number of sides of which corresponds to the number of fluid flow passageways, and are connected to each other against relative rotation by means of a securing sleeve (19) which is inserted into said recess and which has a corresponding external polygonal shape, with said securing sleeve (19) having a central receiving bore (20) for the end (3') of the piston rod. (Fig. 7, 8).

10. Shock absorber piston according to claim 5 or 6, characterised in that the piston body (4) is a one-piece sintered body which is provided with dividing walls (21) leading as far as the curved slots (12") and alternately extending inwards at an angle and extending outwards at an angle, between the radially extending dividing webs which divide the fluid flow passageways (12, 12') from each other. (Figs. 12 to 14).

11. Shock absorber piston according to one of claims 1 to 10, characterised in that the piston body (4) is provided at its circumference with an annular recess (4$^X$) and a piston ring (15) within said recess.

12. Shock absorber piston according to claim 7, characterised in that one or more bypass grooves (4$^X$) which cross the piston body spokes (4$^V$) are formed in or machined in the flat opposed axial inner faces of the two piston body halves (4'). (Fig. 11).

13. Shock absorber piston according to claim 1, characterised in that the annular shoulder (14) supporting the valve-spring discs (5, 6) at their outer margin projects axially beyond its central piston body clamping surface (4$^{XI}$), and the valve-spring discs (5, 6) are conically deformed and thereby biassed by support members (9", 9'") which are fixed to the end (3') of the piston rod and which contact the valvespring discs centrally on their rear faces.

**Revendications**

1. Piston d'amortisseur, en particulier pour amortisseur monotubulaire de véhicule, comportant un corps de piston (4) qui est fixé à l'extrémité (3') de la tige de piston et qui présente, sur chacune de ses eux faces, une chambre annulaire (13) et des rondelles élastiques (5, 6) formant clapet, qui recouvrent cette chambre, qui sont bridées au centre et qui, par leur périphérie extérieure, reposent sur une nervure annulaire (14) qui entoure extérieurement la chambre annulaire (13), et qui présente aussi deux groupes de canaux (12, 12') de passage du liquide, qui peuvent être parcourus en sens opposé, qui vont respectivement, depuis l'une des chambres annulaires (13), en passant à travers le corps de piston (4), obliquement vers sa face opposée et ont leur extrémité d'entrée dans une zone de bordure latérale (4$^{VII}$) du corps de piston (4) située à l'extérieur de la nervure annulaire (14) et diminuée d'épaisseur, caractérisé en ce que les canaux (12, 12') de passage du liquide s'étendent sur toute la périphérie du corps du piston, à l'exception d'étroites barrettes séparatrices ($4^V$) dirigées radialement et situées entre les canaux, étant précisé qu'à leur extrémité d'entrée, située dans la zone de bordure latérale ($4^{VII}$) ils ont la forme d'étroites rainures en arc (12"), dirigées selon la périphérie, et qu'à leur extrémité de sortie (12"") qui débouche dans la chambre annulaire (13), ils possèdent une section sensiblement trapézoïdale, plus courte selon la direction périphérique mais plus large selon la direction radiale, ce qui donne, pour les deux sens de travail du piston, des sections de passage les plus grandes possible pour le liquide d'amortissement.

2. Piston d'amortisseur selon la revendication 1, caractérisé en ce que les rondelles élastiques (5, 6) formant clapet s'appuient dans le sens axial, par leur périphérie extérieure, sur des rondelle Belleville (7, 8) qui s'appuient elles-mêmes axialement sur des rondelles d'appui (9) fixées des deux côtés du corps de piston (4) sur l'extrémité (3') de la tige de piston.

3. Piston d'amortisseur selon la revendication 2, caractérisé en ce que les rondelles d'appui (9) ont un profil en T, reposent, au centre, par leurs têtes (9"), situées l'une vers l'autre, sur les rondelles élastiques (5, 6) formant clapet et, par leurs rebords (9'), situés du côté opposé l'un à l'autre, saisissent, par derrière, les rondelles Belleville (7, 8) en les appuyant.

4. Piston d'amortisseur selon la revendication 1, caractérisé en ce que dans l'une des rondelles élastiques (5'), formant clapet, reposant sur la nervure annulaire correspondante (14) du corps de piston (4), en particulier dans celle qui intervient dans la course de tirage du piston (2), existe, à l'extérieur, un évidement de bypass (5") qui franchit la nervure annulaire (14).

5. Piston d'amortisseur selon l'une des revendications 1 à 4, caractérisé en ce que trois canaux (12, 12') de passage du liquide, alternativement situés l'un derrière l'autre, sont chaque fois prévus pour la course de tirage et la course de poussée du piston (2) (figures 2–6).

6. Piston d'amortisseur selon l'une des revendications 1 à 4, caractérisé en ce que quatre canaux (12, 12') de passage du liquide, alternativement situés l'un derrière l'autre, sont chaque fois prévus pour la course de tirage et la course de poussée du piston ((2) (figures 7–14).

7. Piston d'amortisseur selon la revendication 5 ou 6, caractérisé en ce que le corps de piston (4) est constitué de deux moitiés (4') de corps de piston qui le divisent selon un plan équatorial, qui sont de réalisation identique et qui ont la forme de roues à rayons sur leurs faces intérieures planes, situées l'une sur l'autre, étant précisé que chaque canal (12, 12') de passage du liquide, situé entre le moyeu (4"') du corps de piston, la jante ($4^{IV}$) du corps de piston et les rayons ($4^V$) du corps de piston présentent alternativement soit un fond de canal ($4^{VIII}$) qui jouxte intérieurement le moyeu (4"') du corps de piston et s'étend vers l'extérieur jusqu'à la rainure en arc (12"), soit une paroi oblique ($4^{IX}$) qui jouxte la jante ($4^{IV}$) du corps de piston, est inclinée vers l'intérieur et va en direction de la chambre annulaire (13) correspondante.

8. Piston d'amortisseur selon la revendication 7, caractérisé en ce que les deux moitiés (4') du corps piston présentent chacune sur leur face intérieure (4") une paire d'éléments d'ajustement garantissant leur assemblage décalé angulairement de façon appropriée et comportant par exemple chaque fois une broche d'ajustement (16) et un perçage d'ajustement (17) (figures 2, 3).

9. Piston d'amortisseur selon la revendication 7 caractérisé en ce que les deux moitiés (4') du corps de piston présentent un évidement intérieur polygonal (18) dont le nombre de côtés correspond au nombre de canaux de passage du liquide et sont réunies l'une à l'autre, sans liberté de rotation relative, au moyen d'une douille de fixation (19) qui s'enfiche dans cet évidement, qui présente extérieurement la forme polygonale correspondante et qui présente un perçage central de réception (20) pour l'extrémité (3') de la tige de piston (figures 7, 8).

10. Piston d'amortisseur selon la revendication 5 ou 6, caractérisé en ce que le corps (4) du piston est constitué d'un corps fritté d'une pièce qui présente des fonds (21) qui, entre les barrettes séparatrices qui séparent l'un de l'autre les canaux (12, 12') de passage du liquide et sont dirigées radialement, sont respectivement et alternativement inclinés obliquement vers l'extérieur et vers l'intérieur et vont jusqu'aux rainures (12") en arc (figures 12 à 14).

11. Piston d'amortisseur selon l'une des revendications 1 à 10, caractérisé en ce que le corps de piston (4) présente, à sa périphérie, un évidement ($4^X$) de forme annulaire et un segment (15) de piston qui y est inséré.

12. Piston d'amortisseur selon la revendication 7, caractérisé en ce que dans les faces intérieures planes, situées l'une sur l'autre, des deux moitiés (4') du corps du piston sont venues de forme ou usinées une ou plusieurs rainures de bypass ($4^X$) qui franchissent les rayons ($4^V$) du corps du piston.

13. Piston d'amortisseur selon la revendication 1, caractérisé en ce que l'épaulement annulaire (14), qui appuie les rondelles élastiques (5, 6), formant clapet, sur la périphérie extérieure, dépasse, dans la direction axiale, au-delà de la surface centrale ($4^{XI}$) de bridage du corps de piston; et en ce que les rondelles élastiques (5, 6) formant clapet peuvent se déformer en cône, et prendre ainsi une précontrainte, sous l'action de rondelles d'appui (9", 9"') qui s'appliquent contre elles au centre et par l'arrière et sont fixées à l'extrémité (3') de la tige de piston.

Fig.1

Fig. 2

Fig.3

EP 0 275 368 B1

Fig.6

Fig.5

Fig.4

Fig. 8

Fig. 7

Fig.9

Fig.10

Fig.11

EP 0 275 368 B1

Fig.14

Fig.13

Fig.12

Fig.15